# EUROPEAN PATENT APPLICATION

(11) **EP 4 345 848 A1**
(43) Date of publication of application: **03.04.2024**
(21) Application number: 23194784.7
(22) Date of filing: 01.09.2023
(51) Int. Cl.: H01B 1/24, G01D 21/02

(54) **METHOD FOR DESINGING AND OPTIMIZING FORMULATION OF SEMI-CONDUCTIVE SHIELDING MATERIAL FOR HIGH-VOLTAGE AC CABLE**

(30) Priority: 02.09.2022 CN 202211070871
(71) Applicant: Electric Power Research Institute. China Southern Power Grid, Guangzhou, Guangdong 510663 (CN)
(72) Inventor: Hou, Shuai, Guangzhou, Guangdong 510663 (CN); Fu, Mingli, Guangzhou, Guangdong 510663 (CN); Zhan, Yunpeng, Guangzhou, Guangdong 510663 (CN); Fan, Lingmeng, Guangzhou, Guangdong 510663 (CN); Jia, Lei, Guangzhou, Guangdong 510663 (CN); Li, Xiaolin, Guangzhou, Guangdong 510663 (CN); Jia, Lichuan, Guangzhou, Guangdong 510663 (CN); Hui, Baojun, Guangzhou, Guangdong 510663 (CN); Zhu, Wenbo, Guangzhou, Guangdong 510663 (CN); Feng, Bin, Guangzhou, Guangdong 510663 (CN); Zhang, Yifan, Guangzhou, Guangdong 510663 (CN)
(74) Representative: Hoffmann Eitle

(57) **Abstract**

The present invention relates to a method for designing and optimizing formulation of semi-conductive shielding material for high-voltage AC cables, including: acquiring formulation of semi-conductive shielding material; preparing a sample by hot-pressing the matrix resin in the formulation; testing a first type analysis index I of the hot-pressed sample; performing a first type analysis on the matrix resin according to a test result of the first type analysis index I, to achieve an optimized type of matrix resin; testing a second type analysis index II of the conductive carbon black in the formulation; and performing a second type analysis on the conductive carbon black according to a test result of the second type analysis index II, to achieve an optimized type of conductive carbon black; preparing a first sample of semi-conductive shielding material from the formulation, wherein the matrix resin and the conductive carbon black are in the optimized types; testing a third type analysis index III of the first sample; and performing a third type analysis on the dispersant and the coupling agent according to a test result of the third type analysis index III, to achieve optimized types of dispersant and coupling agent; and preparing a second sample of semi-conductive shielding material from the formulation, wherein the matrix resin, the conductive carbon black, the dispersant, and the coupling agent are in the optimized types; testing a fourth type analysis index IV of the second sample; performing a fourth type analysis on the cross-linking agent according to a test result of the fourth type analysis index IV, to achieve an optimized type of cross-linking agent, thereby obtaining an optimized formulation; and verifying performances of the optimized formulation.

## Description

### TECHNICAL FIELD

The present invention belongs to the technical field of power transmission, and particularly to a method for designing and optimizing formulation of semi-conductive shielding material for high-voltage alternating-current (AC) cable.

### BACKGROUND

With the rapid development of long-distance high-voltage power transmission, the demand for high-voltage cable has been increasing, and research and development of the material for high-voltage cable is particularly urgent. Compared with medium-voltage cable and low-voltage cable, high-voltage cable and ultra-high-voltage cable require higher standards of the performance and extrusion condition of the shielding materials, such as ultra-clean and ultra-smooth of the extrusion surface of the final products. Therefore, there are more strict requirements for raw materials, formulations and production processes of shielding materials. Currently, the shielding materials for cross-linked polyethylene (XLPE) cable for 35 kV or below voltage have been basically localized in China. However, there is still a lack of research for the semi-conductive shielding materials for high-voltage cable of 110 kV or above. The semi-conductive shielding materials for high-voltage AC cable are prepared by using ethylene-butyl acrylate (EBA) or ethylene-ethyl acrylate (EEA) as a matrix resin adding conductive carbon black, functional agents and other fillers, melting extrusion and granulation in a twin-screw extruder, and adding crosslinking agent for pre-crosslinking.

Matrix resin is used to improve the ductility of the semi-conductive shielding material, and the carbon black is used to adjust the electrical resistivity of the semi-conductive shielding material. In general, it is required that the electrical resistivity of the semi-conductive shielding material is lower than 10³ Ω·cm, and thus a large amount of the carbon black or other conductive fillers need to be added. There are problems such as poor processability, deterioration of mechanical performance, etc., in the semi-conductive shielding material due to the addition of a large amount of fillers. The conductive network composed of the conductive fillers can be damaged by bulk expansion of the matrix resin of the semi-conductive shielding material with increasing temperature, causing a sharp increase in the electrical resistivity of the material. Especially, when the temperature is close to the melting point of the matrix resin, the conductive network can be largely damaged, exhibiting a significant positive temperature coefficient (PTC) effect. The working temperature of the XLPE cable is severely restricted by the PTC effect. Therefore, not only the semi-conductive shielding material needs to have a low electrical resistivity, but also the electrical resistivity needs to be temperature-stable.

The formulation design of semi-conductive shielding material for high-voltage AC cable primarily includes four parts: selection of a matrix resin, design of conductive carbon black formulation, design of a dispersion formulation, and design of a cross-linking reaction formulation. In the past, in order to design the formulation of the semi-conductive shielding material for high-voltage AC cable, it is generally necessary to carry out comprehensive experiments on multiple formulations composed of various matrix resins, various conductive carbon black, various antioxidants, and various cross-linking agents. The properties of materials prepared with different formulations are compared and analyzed comprehensively to obtain a qualified formulation. As described above, the properties of different matrix resins and conductive carbon black are significant different. Meanwhile, cross-linking agents and dispersants can greatly affect various aspects of the shielding material. It can be seen that the formulation design of the semi-conductive shielding material for high-voltage AC cable is complex. For solving complex problem, an orthogonal test method can be used in theory, which in principle has many advantages such as a smaller number of tests, effective, being easy and convenient to perform, efficient, etc. However, the performance evaluation of the semi-conductive shielding material involves mechanical performance, electrical performance, surface finish, cross-linking characteristic, etc., and the interaction mechanisms among cross-linking agent, dispersants, and conductive carbon black are complex. Therefore, the orthogonal test method is not that accurate, and it is difficult to determine a law from the tests or obtain a reliable result.

At present, the semi-conductive shielding material for high-voltage cable made in China still has the problems of unstable electrical resistivity, poor surface finish, etc. The matrix resins and conductive carbon black for preparing shielding material of high-voltage cable are both imported from abroad. So the real localization in China has not been realized. Currently, when to design formulation of semi-conductive shielding material for high-voltage AC cable, there is no feasible method for Chinese manufacturers to adopt. There are two main methods for determining a material formulation: one is to carry out a large number of unsystematic experiments according to China national standards to obtain a preliminary formulation; and the other is to optimize conventional formulations of semi-conductive shielding material based on the specific characteristics of the materials. The former method for formulation design has obvious blindness due to the poor systematization, wasting a large amount of time, manpower, and material resources. As for the latter method, the properties of matrix resins, conductive carbon black, functional auxiliaries, dispersants, and cross-linking agents from different commercial sources are obviously different, and an optimal material formulation could not be obtained when a raw material is changed among different commercial sources without considering the effect caused by the difference in the source materials.

The researches and developments of the semi-conductive shielding material began relatively late in China. Until the 1990s, the shielding material made in China is not used by cable manufacturers of 10 kV cable. After years of technological researches, the shielding material for 35 kV or below voltage cable has been fully localized in China, but the shielding material for high-voltage cable for 110 kV or above voltage is still largely dependent on imports. The lack of methods for designing material formulations would result in increased costs of money and time. Now shielding material for high-voltage cable manufacturers face the following three reasons that need to optimize the formulation. (1) The material formulation of semi-conductive shielding material for high-voltage cable needs to be optimized due to the fact that various aspects of the material still could not reach the international advanced level. (2) It needs to import conductive carbon black used in semi-conductive shielding material for high-voltage cable, and formulation of shielding material based on conductive carbon black made in China is still at an exploration stage. The formulation needs to be re-optimized when the performance of the material prepared with domestic conductive carbon black change. (3) The processing agents, dispersants and cross-linking agents can affect each other, and further affect the performances of the materials. Therefore, it is extremely important to make systematic research on the types and contents of the agents.

Overall, design and optimization of formulations of semi-conductive shielding material for high-voltage cable are the key to improve material performance and upgrade the product. However, there is currently a lack of systematic methods for designing and optimizing formulations. Most of the conventional techniques adopt blind and bulky tests, which are not conducive to shortening the development cycle and improving the performance of semi-conductive shielding material, and at least the following problems exist: (1) the systematic selection of different material types is absent; (2) the systematic study on the material formulation is absent, and a long experimental period is needed; and (3) the formulation design is merely based on basic relevant standards, lacking evaluation and optimization of key features.

### SUMMARY

According to embodiments of the present invention, a method for designing and optimizing formulation of semi-conductive shielding material for high-voltage AC cable is provided.

A method for designing and optimizing formulation of semi-conductive shielding material for high-voltage AC cable includes following steps of:
step 1, acquiring formulation for preparing semi-conductive shielding material for high-voltage AC cable, wherein the formulation includes a matrix resin, conductive carbon black, a dispersant, a coupling agent, and a cross-linking agent;
step 2, preparing a sample of substantially pure matrix resin by hot-pressing the matrix resin in the formulation of step 1; testing a first type analysis index I of the hot-pressed sample; performing a first type analysis on the matrix resin according to a test result of the first type analysis index I, to achieve an optimized type of matrix resin;
step 3, testing a second type analysis index II of the conductive carbon black in the formulation of step 1; and performing a second type analysis on the conductive carbon black according to a test result of the second type analysis index II, to achieve an optimized type of conductive carbon black;
step 4, preparing a first sample of semi-conductive shielding material from the formulation, wherein the matrix resin and the conductive carbon black are in the optimized types; testing a third type analysis index III of the first sample; and performing a third type analysis on the dispersant and the coupling agent according to a test result of the third type analysis index III, to achieve optimized types of dispersant and coupling agent;
step 5, preparing a second sample of semi-conductive shielding material from the formulation, wherein the matrix resin, the conductive carbon black, the dispersant, and the coupling agent are in the optimized types; testing a fourth type analysis index IV of the second sample; and performing a fourth type analysis on the cross-linking agent according to a test result of the fourth type analysis index IV, to achieve an optimized type of cross-linking agent, thereby obtaining an optimized formulation;
step 6, verifying performances of the optimized formulation; determining whether the performances of the optimized formulation satisfies preset requirements; if yes, terminating the method; and if no, repeating the method from step 1.

Preferably, the method further includes:
step 3', preparing multiple third samples of semi-conductive shielding material from the formulation, wherein only proportions of the conductive carbon black are varied among the third samples; testing a second proportion analysis index II of each third sample; and performing a second proportion analysis on the conductive carbon black according to a test result of the second proportion analysis index II, to achieve an optimized proportion of conductive carbon black.

Preferably, the method further includes:
step 4', preparing multiple fourth samples of semi-conductive shielding material from the formulation, wherein only proportions of the dispersant and the coupling agent are varied among the fourth samples; testing a third proportion analysis index III of each fourth sample; and performing a third proportion analysis on the dispersant and the coupling agent according to a test result of the third proportion analysis index III, to achieve an optimized proportion of dispersant and coupling agent.

Preferably, the method further includes:
step 5', preparing multiple fifth samples of semi-conductive shielding material from the formulation, wherein only proportions of the cross-linking agent are varied among the fifth samples; testing a fourth proportion analysis index IV of each fifth sample; and performing a fourth proportion analysis on the cross-linking agent according to the test result of the fourth proportion analysis index IV, to achieve an optimized proportion of cross-linking agent.

Preferably, steps 3' to 5' are performed after step 5, in the preparing of the third samples, the fourth samples, or the fifth samples, all the matrix resin, the conductive carbon black, the dispersant, the coupling agent, and the cross-linking agent are in the optimized types.

Preferably, step 3' is performed next to step 3, in the preparing of the third samples, the matrix resin and the conductive carbon black are in the optimized types;
step 4' is performed next to step 4, in the preparing of the fourth samples, the matrix resin, the dispersant, and the coupling agent are in the optimized types, the conductive carbon black is in the optimized type and the optimized proportion;
step 5' is performed next to step 5, in the preparing of the fifth samples, the matrix resin and the cross-linking agent are in the optimized types, the conductive carbon black, the dispersant, and the coupling agent are in the optimized types and the optimized proportions.

Preferably, the first type analysis index I includes melt flow index, tensile strength, elongation at break, and melting point, and in step 2, the first type analysis on the matrix resin includes:
determining whether test results of melting index, tensile strength, elongation at break, and melting point are respectively larger than a melting index set value, a tensile strength set value, a matrix resin elongation set value, and a melting point set value;
if yes, determining that the matrix resin is in the optimized type of matrix resin; and
if no, substituting the matrix resin with another matrix resin, and repeating the first type analysis.

Preferably, the second type analysis index II includes dibutyl phthalate (DBP) absorption number, particle size, ash content, and volume electrical resistivity, and in step 3, the second type analysis on the conductive carbon black includes:
determining whether a test result of DBP absorption number is larger than a DBP absorption number set value, a the test result of particle size is in a particle size set range, and test results of ash content and volume electrical resistivity are respectively smaller than an ash content set value and a volume electrical resistivity set value;
if yes, determining that the conductive carbon black is in the optimized type of conductive carbon black; and
if no, substituting the conductive carbon black with another conductive carbon black, and repeating the second type analysis.

Preferably, the second proportion analysis index II includes electrical resistivity and elongation at break, and in step 3', the second proportion analysis on the conductive carbon black includes:
selecting proportions of conductive carbon black corresponding to the third samples whose test results satisfy that test results of electrical resistivity are smaller than an electrical resistivity set value and test results of elongation at break are larger than the elongation set value;
sorting the selected proportions of conductive carbon black according to the test results of electrical resistivity from small to large, and when the test results of electrical resistivity are the same, according to the test results of elongation at break from large to small, thereby obtaining an optimized proportion sequence of conductive carbon black;
determining that a first proportion value in the optimized proportion sequence of conductive carbon black is the optimized proportion of conductive carbon black.

Preferably, in steps 4 and 4', a weight ratio between the dispersant and the coupling agent is a fixed value, and only proportions of a combination of the dispersant and the coupling agent are varied among the fourth samples.

Preferably, the fixed value is 1:1.

Preferably, the third type analysis index III includes electrical resistivity, elongation at break, and surface protrusion number, and in step 4, the third type analysis on the dispersant and the coupling agent includes:
determining whether test results of electrical resistivity and surface protrusion number are respectively smaller than an electrical resistivity set value and a surface protrusion number set value, and a test result of elongation at break is larger than an elongation set value;
if yes, determining that the dispersant and the coupling agent are in the optimized types of dispersant and coupling agent; and
if no, substituting the dispersant and the coupling agent respectively with another dispersant and another coupling agent, and repeating the third type analysis.

Preferably, the third proportion analysis index III includes surface protrusion number, and in step 4', the third proportion analysis on the dispersant and the coupling agent includes:
selecting proportions of dispersant and coupling agent corresponding to the fourth samples whose test results of surface protrusion number are smaller than a surface protrusion number set value;
sorting the selected proportions of dispersant and coupling agent according to the test results of surface protrusion number from small to large, thereby obtaining an optimized proportion sequence of dispersant and coupling agent;
determining that a first proportion value in the optimized proportion sequence of dispersant and coupling agent is the optimized proportion of dispersant and coupling agent.

Preferably, the fourth type analysis index IV includes electrical resistivity, elongation at break, and surface protrusion number, and in step 5, the fourth type analysis on the cross-linking agent includes:
determining whether test results of electrical resistivity and surface protrusion number are respectively smaller than the electrical resistivity set value and the surface protrusion number set value, and a test result of elongation at break is larger than the elongation set value;
if yes, determining that the cross-linking agent is in the optimized type of cross-linking agent; and
if no, substituting the cross-linking agent with another cross-linking agent, and repeating the fourth type analysis.

Preferably, the fourth proportion analysis index IV includes gel content, thermal elongation, and permanent deformation, and in step 5', the fourth proportion analysis on the cross-linking agent includes:
selecting proportions of cross-linking agent corresponding to the fifth samples whose test results satisfy that test results of gel content are larger than a gel content set value, and test results of thermal elongation and test results of permanent deformation are respectively larger than a thermal elongation set value and a permanent deformation set value;
sorting the selected proportions of cross-linking agent according to the test results of gel content from large to small, and when the test results of gel content are the same, according to the test results of thermal elongation from small to large, and when the test results of thermal elongation are the same, according to the test results of permanent deformation from small to large, thereby obtaining an optimized proportion sequence of cross-linking agent;
determining that a first proportion value in the optimized proportion sequence of cross-linking agent is the optimized proportion of cross-linking agent.

Preferably, the verifying performances of the optimized formulation in step 6 includes:
preparing an optimized sample of semi-conductive shielding material from the optimized formulation;
testing electrical resistivity, tensile strength, elongation at break, strippability, and surface protrusion number;
determining whether test results of electrical resistivity and surface protrusion number are respectively smaller than an electrical resistivity set value and a surface protrusion number set value, test results of tensile strength and elongation at break are respectively larger than a tensile strength set value and an elongation set value, and the optimized sample is not strippable;
if yes, determining that the performances of the optimized formulation satisfies preset requirements; and
if no, determining that the performances of the optimized formulation do not satisfies preset requirements.

Preferably, in testing the first type analysis index I, the tensile strength and elongation at break are obtained by a stress-strain test, the melting point of the sample is obtained by a thermogravimetric analysis, and the melt flow index is obtained by using a melt flow index tester.

Preferably, the first type analysis index I further includes crystallization behavior of the matrix resin, dependence of mechanical performance on temperature, and rheological performance.

Preferably, in testing the first type analysis index I, the crystallization behavior of the matrix resin is obtained by differential scanning calorimetry, the dependence of mechanical performance on temperature is obtained by dynamic thermomechanical analysis, and the rheological performance is obtained by using a rotational rheometer.

Preferably, in testing the second type analysis index II, the particle size of the carbon black is obtained by X-ray diffraction (XRD),the ash content of the carbon black is obtained by X-ray photoelectron spectroscopy, and the volume electrical resistivity of the carbon black is obtained by using a multimeter.

Preferably, the second type analysis index II further includes crystallization degree, crystallite size, and aggregation morphology.

Preferably, in testing the third type analysis index III and the fourth type analysis index IV, the surface protrusion number is obtained from a tape shaped semi-conductive shielding material extruded by using a single screw extruder, the electrical resistivity is a volume resistivity of the semi-conductive shielding material obtained by using a multimeter, and the elongation at break is obtained by a stress-strain test.

Preferably, the third type analysis index III further includes tensile strength and aggregation morphology of the carbon black in the semi-conductive shielding material.

Preferably, in testing the third type analysis index III, the particle aggregate morphology of the carbon black in the semi-conductive shielding material is obtained by scanning electron microscopy (SEM) and transmission electron microscopy (TEM), and the tensile strength of the semi-conductive shielding material is obtained by a stress-strain test.

An embodiment of a method for designing and optimizing formulation of semi-conductive shielding material for high-voltage AC cable includes following steps of:
step 1, acquiring formulation for preparing semi-conductive shielding material for high-voltage AC cable, wherein the formulation includes a matrix resin, conductive carbon black, a dispersant, a coupling agent, and a cross-linking agent;
step 2, preparing a sample of substantially pure matrix resin by hot-pressing the matrix resin in the formulation of step 1; testing a first type analysis index I of the hot-pressed sample; performing a first type analysis on the matrix resin according to a test result of the first type analysis index I, to achieve an optimized type of matrix resin;
step 3, testing a second type analysis index II of the conductive carbon black in the formulation of step 1; and performing a second type analysis on the conductive carbon black according to a test result of the second type analysis index II, to achieve an optimized type of conductive carbon black;
step 3', preparing multiple third samples of semi-conductive shielding material from the formulation, wherein the matrix resin and the conductive carbon black are in the optimized types, and only proportions of the conductive carbon black are varied among the third samples; testing a second proportion analysis index II of each third sample; and performing a second proportion analysis on the conductive carbon black according to a test result of the second proportion analysis index II, to achieve an optimized proportion of conductive carbon black;
step 4, preparing a first sample of semi-conductive shielding material from the formulation, wherein the matrix resin is in the optimized type, the conductive carbon black is in the optimized type and the optimized proportion; testing a third type analysis index III of the first sample; and performing a third type analysis on the dispersant and the coupling agent according to a test result of the third type analysis index III, to achieve optimized types of dispersant and coupling agent; and
step 4', preparing multiple fourth samples of semi-conductive shielding material from the formulation, wherein the matrix resin, the dispersant, and the coupling agent are in the optimized types, the conductive carbon black is in the optimized type and the optimized proportion, and only proportions of the dispersant and the coupling agent are varied among the fourth samples; testing a third proportion analysis index III of each fourth sample; and performing a third proportion analysis on the dispersant and the coupling agent according to a test result of the third proportion analysis index III, to achieve an optimized proportion of dispersant and coupling agent;
step 5, preparing a second sample of semi-conductive shielding material from the formulation, wherein the matrix resin is in the optimized type, the conductive carbon black, the dispersant, and the coupling agent are in the optimized types and the optimized proportions; testing a fourth type analysis index IV of the second sample; and performing a fourth type analysis on the cross-linking agent according to a test result of the fourth type analysis index IV, to achieve an optimized type of cross-linking agent; and
step 5', preparing multiple fifth samples of semi-conductive shielding material from the formulation, wherein the matrix resin and the cross-linking agent are in the optimized types, the conductive carbon black, the dispersant, and the coupling agent are in the optimized types and the optimized proportions, and only proportions of the cross-linking agent are varied among the fifth samples; testing a fourth proportion analysis index IV of each fifth sample; and performing a fourth proportion analysis on the cross-linking agent according to the test result of the fourth proportion analysis index IV, to achieve an optimized proportion of cross-linking agent, thereby obtaining an optimized formulation.

Compared with prior art, the present invention has the following advantages. The present invention provides a definite guiding method for selecting the types of a matrix resin, conductive carbon black, a dispersant, and a cross-linking agent for semi-conductive shielding material. The matrix resin is selected by mechanical performance and thermal stability. The conductive carbon black is selected by DBP absorption number, particle size, ash content and electrical performance. Therefore, the key performances of the matrix resin and the conductive carbon black are evaluated, to avoid formulation failure and waste of the subsequent experimental workload, greatly improving the success rate of the formulation design. The dispersant and the coupling agent can be evaluated and analyzed together, reducing waste of experimental workload caused by individually evaluating the coupling agent and simplifying the optimizing steps for the formulation.

### BRIEF DESCRIPTION OF THE DRAWINGS

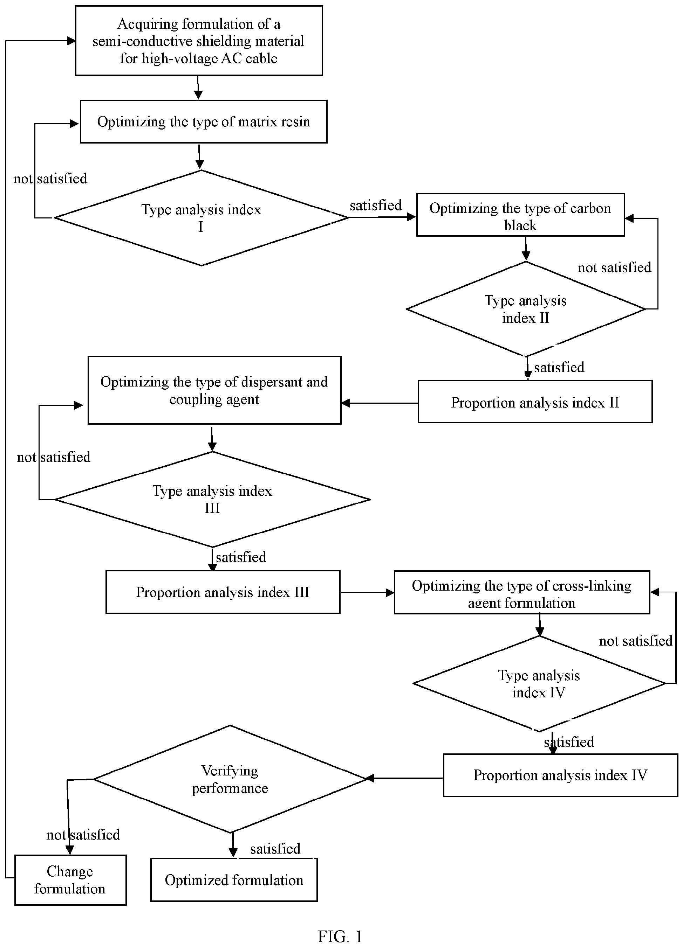

FIG. 1 is an overall schematic flow chart of a method for designing and optimizing formulation of semi-conductive shielding material for high-voltage AC cable according to an embodiment of the present invention.

### DETAILED DESCRIPTION

The present invention will now be described in detail with reference to the accompanying drawings and embodiments in order to make the objects, technical solutions, and advantages of the present disclosure more clear.

Unless otherwise specified, all the technical and scientific terms herein shall be understood as the same meaning with those commonly accepted by a person skilled in the art.

The ordinal terms "first", "second", etc. are used merely as labels to distinguish one element having a certain name from another element having the same name, and cannot be understood as indicating or implying any priority, precedence, or order of one element over another, or indicating the quantity of the element.

As shown in FIG. 1, an embodiment of a method for designing and optimizing formulation of semi-conductive shielding material for high-voltage AC cable is provided. The method includes following steps 1 to 6.

In step 1, an initial formulation of semi-conductive shielding material for high-voltage AC cable is acquired. The initial formulation of the semi-conductive shielding material for high-voltage AC cable includes a matrix resin, conductive carbon black, a dispersant, a coupling agent, and a cross-linking agent. In some embodiments, the initial formulation further includes a lubricant and an antioxidant.

In step 2, the type of the matrix resin is optimized. In detail, a sample of substantially pure matrix resin is formed by hot-pressing the matrix resin in the formulation acquired in step 1. A first type analysis index I of the hot-pressed matrix resin sample is tested, and a first type analysis on the matrix resin according to the test result of the first type analysis index I is performed to obtain an optimized type of matrix resin.

The first type analysis includes a step of determining whether the test result can satisfy the requirements on the first type analysis index I, if yes, the type of the matrix resin is determined to be qualified as the optimized type of matrix resin, and if no, the current type of the matrix resin is not qualified and thus substituted with another type of matrix resin. The matrix resin satisfied the requirements on the first type analysis index I can be screened to obtain the optimized type of the matrix resin. Once the requirements on the first type analysis index I are satisfied by one type of matrix resin, the method enters the next step, and there is no need to test all types of matrix resins.

In some embodiments of the present invention, the first type analysis index I includes melt flow index, tensile strength, elongation at break, and melting point, and optionally can further include crystallization behavior, dependence of mechanical performance on temperature, and rheological performance. In some embodiments, the tensile strength and elongation at break are obtained by a stress-strain test, the melting point of the sample is obtained by a thermogravimetric analysis, and the melt flow index is obtained by using a melt flow index tester. The crystallization behavior of the matrix resin is obtained by differential scanning calorimetry, the dependence of mechanical performance on temperature is obtained by dynamic thermomechanical analysis, and the rheological performance is obtained by using a rotational rheometer.

In some embodiments, the specific requirements on the first type analysis index I are shown in Table 1.

**Table 1. Specific requirements on the first type analysis index I**

| Melting index | Mechanical performances | Thermal performance |
|---|---|---|
| ≥ 8 g/10min | tensile strength ≥12 MPa | melting point ≥ 95 °C |
| | elongation at break ≥ 700 % | |

It is noted that with respect to semi-conductive shielding material for high-voltage cable, only a limited number of indexes have been specified generally in industry standards. The standards rarely require key performances directly relating to the material formulation, such as melt flow index, mechanical performance, thermal performance, etc. The melt flow index is related to flowability and polarity of the material system. By regulating the melt flow index, the shielding layer can have good interfacial compatibility with the insulating layer, so that the outer shielding layer is not strippable from the insulating layer, and the inner shielding layer can be tightly combined with the insulating layer, thereby ensuring the long-term operation of the cable. Good mechanical performance enables the shielding layer to resist impact loads and withstand vibrations, and ultimately has an effect on the long-term stability of the material. The matrix resin with a high thermal decomposition temperature can minimize thermal decomposition of the matrix material and extend the service life of the high-voltage cable.

In addition, in the existing industry standards, the specific requirements are focused on the performances of the final semi-conductive shielding material, but rarely about the matrix resin, not to mention providing a guiding method for optimizing the matrix resin. However, melt flow index, mechanical performance, and thermal performance of the matrix resin decisively affect some key properties of semi-conductive shielding material for high-voltage cable. Hence, the current formulation design has blindness at the beginning. The method provided in the present invention optimizes the formulation of the semi-conductive shielding material by satisfying the key performances of the matrix resin, which is an improvement over prior art.

In step 3, the conductive carbon black is optimized by testing and analyzing microstructure and performance of the conductive carbon black in the formulation acquired in step 1, ensuring that the conductive carbon black satisfies the requirements on the second type analysis index II and the second proportion analysis index II, to obtain an optimized type and an optimized proportion of conductive carbon black. Similar to step 2, once the requirements on the second type analysis index II are satisfied by one type of conductive carbon black, the method enters the next step, and there is no need to test all types of conductive carbon blacks.

In some embodiments of the present invention, the second type analysis index II includes dibutyl phthalate (DBP) absorption number, particle size, ash content, and volume electrical resistivity of the conductive carbon black, and optionally can further include crystallization (graphitization) degree, crystallite size, and aggregation morphology of the carbon black. In some embodiments, the crystallization degree and crystallite size of the carbon black are obtained through XRD, the aggregation morphology and particle size of the carbon black are obtained through SEM and TEM (Tecnai G2 F20), the ash content of the carbon black is obtained by X-ray photoelectron spectroscopy (XPS), and the volume electrical resistivity of the carbon black is obtained by using a multimeter.

It is noted that with respect to semi-conductive shielding material for high-voltage cable, only indexes of shielding material have been specified generally in industry standards. The standards rarely require key performances relating to the material formulation, such as DBP absorption number, particle size, ash content, and volume electrical resistivity of the conductive carbon black. The DBP absorption number can characterize the void volume in aggregated carbon black particles, and depends on the aggregation degree of the carbon black particles. The void volume can be obtained from the volume of an oil substance absorbed by the carbon black. Hence, the DBP absorption number of the carbon black can reflect the aggregation degree of the carbon black particles. The particle size of the conductive carbon black should be controlled within a certain range to ensure good dispersion of the conductive carbon black in the matrix resin to form a conductive network in the matrix resin. The ash in the conductive carbon black refers to the residual impurity after combustion of the carbon black in a high temperature furnace. The ash in the conductive carbon black is primarily derived from inorganic substances in raw oil and dissolved inorganic salts in water included in the processing (quenching, wet granulation). High ash content can cause discharge accidents. The method provided in the present invention optimizes the formulation of the semi-conductive shielding material by satisfying the key performances of the conductive carbon black, which is an improvement over prior art.

In some embodiments, the specific requirements on the second type analysis index II are shown in Table 2.

**Table 2. Specific requirements on the second type analysis index II**

| DBP absorption value | Particle size | Ash content | Volume resistivity |
|---|---|---|---|
| ≥140 cc/100 g | 25 nm to 80 nm | <0.2% | <5 Ω·cm |

In step 3', the second proportion analysis index II includes electrical resistivity and mechanical performance, e.g., elongation at break of the semi-conductive shielding material. Multiple samples of the semi-conductive shielding material are prepared from the initial formulation modified with the optimized type of matrix resin and the optimized type of conductive carbon black. The proportion of each component in the formulation is decided according to experiences, national standards, and/or industry standards. Only the proportion of the conductive carbon black is varied among the samples. In other words, the samples of the semi-conductive shielding material are formed from the same formulation except different proportions of conductive carbon black. The number and range of the proportions of the conductive carbon black can be decided according to actual needs. All the samples are ranked according to the test results of resistivity, and the lower the resistivity, the prior the sample in the rank. When the test results of electrical resistivity are equal, the mechanical performance, e.g., elongation at break, is evaluated, and for example, the larger the elongation at break, the prior the sample in the rank. The proportions of conductive carbon black of the samples of semi-conductive shielding material are ranked correspondingly to form a proportion sequence. The first proportion value in the proportion sequence is the optimized proportion of conductive carbon black, and used in the following analysis steps. The subsequent proportion values in the proportion sequence are substitutes when the prior proportion value renders unsatisfactory results in the following steps.

In some embodiments, the specific requirements on the second proportion analysis index II are shown in Table 3.

**Table 3. Specific requirements on the second proportion analysis index II**

| Resistivity | Elongation at break |
|---|---|
| ≤ 35Ω·cm | ≥150 % |

In step 4, a sample of semi-conductive shielding material is prepared from the initial formulation modified with the optimized type of matrix resin obtained in step 2 and the optimized type of conductive carbon black obtained in step 3, and optionally modified with the optimized proportion of conductive carbon black obtained in step 3'. To simplify the screening of the types of dispersant and coupling agent, the weight ratio between the dispersant and the coupling agent can be in a fixed value, such as 1:1. The third type analysis index III is tested, and the test results are determined as whether to satisfy the requirements on the third type analysis index III, thereby obtaining an optimized type of dispersant and an optimized type of coupling agent.

Preferably, the third type analysis index III includes electrical resistivity, elongation at break, and surface protrusion number per unit area of the sample, and optionally includes tensile strength of the sample and particle aggregation morphology of the carbon black in the sample. The aggregate morphology of the carbon black in the semi-conductive shielding material is obtained by SEM and TEM (Tecnai G2 F20), the surface protrusion number per unit area is obtained from a tape shaped sample extruded by using a single screw extruder, the volume electrical resistivity of the sample is obtained by using a multimeter, and the tensile strength parameter and elongation at break is obtained by a stress-strain test.

In some embodiments, the specific requirements on the third type analysis index III, which are also the specific requirements on the fourth type analysis index IV, are shown in Table 4.

**Table 4. Specific requirements on the third type analysis index III and fourth type analysis index IV**

| Resistivity | Elongation at break | Surface protrusion number |
|---|---|---|
| ≤ 35Ω·cm | ≥150 % | ≤5 |

In step S4', multiple samples of the semi-conductive shielding material are prepared from the initial formulation modified with the optimized types of matrix resin, conductive carbon black, dispersant, and coupling agent obtained in steps 2 to 4, and optionally modified with the optimized proportion of conductive carbon black obtained in step 3'. The weight ratio between the dispersant and the coupling agent can be a fixed value, such as 1: 1. The proportions of the matrix resin, the conductive carbon black, the lubricant, the antioxidant, and the cross-linking agent constant are fixed. Only the proportion of the combination of the dispersant and the coupling agent is varied among the samples. In other words, the samples of the semi-conductive shielding material are formed from the same formulation except different proportions of dispersant and coupling agent.

Preferably, the third proportion analysis index III includes surface finish parameter, such as the surface protrusion number per unit area, of the semi-conductive shielding material, and optionally includes resistivity and mechanical performance of the semi-conductive shielding material. All the samples are ranked according to the test results of the surface protrusion number, and the fewer the surface protrusion number per unit area, the better the surface finish, and the prior the sample in the rank. When the samples have equal surface protrusion number per unit area, resistivity and mechanical performance can be evaluated, and for example, the lower the resistivity, the prior the sample in the rank, and the larger the elongation at break, the prior the sample in the rank. The proportions of the combination of the dispersant and the coupling agent are ranked correspondingly to form a proportion sequence. The first proportion value in the proportion sequence is the optimized proportion of the combination of the dispersant and the coupling agent, and used in the following analysis steps. The subsequent proportion values in the proportion sequence are substitutes when the prior proportion value renders unsatisfactory results in the following steps. In some embodiments, the specific requirements on the third proportion analysis index III, such as the surface protrusion number per unit area, can be the same with that in the third type analysis index IV, as shown in Table 4.

In an embodiment, the method for testing surface finish, such as the surface protrusion number, in the third proportion analysis index III includes: melting and extruding the prepared sample of semi-conductive shielding material for high-voltage cable from a single screw extruder, through an opening in size of 20 mm × 1 mm to form a sample tape. The temperatures of four sections of the extruder are 100 °C, 105 °C, 105 °C, and 110 °C, and a rotating speed of the screw is 100 rpm. The extruded first 3 meters of the sample tape is cut off to eliminate effect of the previous formulation. The sample tape with a length of 1 meter is taken for characterizing the surface finish, and the number of protrusions with a size greater than 50 microns on the surface of the sample tape is counted by using an optical microscope.

Further, since both the coupling agent and the dispersant function to improve dispersibility of the conductive carbon black in the matrix resin and to reduce aggregation of the conductive carbon black, they can be evaluated with the same indexes and thus are evaluated and analyzed together in the embodiment of the present invention, reducing waste of experimental workload caused by individually evaluating the coupling agent and simplifying the optimizing steps.

The method for treating the conductive carbon black with the coupling agent and the dispersant in some embodiments of the present invention includes continuously mixing the conductive carbon black with the coupling agent in a high-speed mixer with a rotating speed of 150 rpm to 250 rpm for 15 minutes, and then adding with the dispersant at 45 °C to 50 °C and continuously mixing for 15 minutes.

In step 5, a sample of semi-conductive shielding material is prepared from the initial formulation modified with the optimized type of matrix resin, the optimized type of conductive carbon black, and the optimized type of coupling agent and dispersant, obtained in steps 2 to 4, and optionally modified with the optimized proportion of conductive carbon black obtained in step 3' and the optimized proportion of coupling agent and dispersant obtained in step 4'. The fourth type analysis index IV of the sample is tested, and the test results are determined as whether to satisfy the requirements on the fourth type analysis index IV, thereby obtaining an optimized type of cross-linking agent.

In some embodiments, the fourth type analysis index IV includes electrical resistivity, elongation at break, and surface protrusion number per unit area of the sample, which can be the same as the third type analysis index III, and is not repeated herein.

In step 5', multiple samples of semi-conductive shielding material are prepared from the initial formulation modified with the optimized type of matrix resin, the optimized type of conductive carbon black, the optimized type of coupling agent and dispersant, and the optimized type of cross-linking agent, obtained in steps 2 to 4. Only the proportion of the cross-linking agent is varied among the samples. In other words, the samples of the semi-conductive shielding material are formed from the same formulation except different proportions of cross-linking agent.

In some embodiments, the fourth proportion analysis index IV includes gel content, permanent deformation, and thermal elongation, characterizing the cross-linking degree of the sample. All the samples are ranked according to the test results of the gel content, and the greater the get content, the prior the sample in the rank. When the samples have equal gel content, thermal elongation and permanent deformation are evaluated, and for example, the smaller the thermal elongation, the prior the sample in the rank, and the smaller the permanent deformation, the prior the sample in the rank. The proportions of the cross-linking degree are ranked correspondingly to form a proportion sequence. The first proportion value in the proportion sequence is the optimized proportion of the cross-linking degree, and used in the final verification step. The subsequent proportion values in the proportion sequence are substitutes when the prior proportion value renders unsatisfactory results in the following steps.

In some embodiments, the specific requirements on the fourth proportion analysis index IV are shown in Table 5.

**Table 5. Specific requirements on the fourth proportion analysis index IV**

| Gel content | Permanent deformation | Thermal elongation |
|---|---|---|
| ≥70% | ≤20% | ≤80% |

In step 6, the performances of the optimized formulation are verified to determine whether the performances of the optimized formulation satisfies preset requirements. If all test results can satisfy the requirements, the optimization can be terminated; otherwise, the types and proportions of the components in the formulation are re-selected and re-verified.

In some embodiments, performance verification of the optimized formulation further includes verification of electrical performance, mechanical performance, and surface finish. If all test results can satisfy the requirements, the formulation is considered as an optimal formulation. In some embodiments, if any one of the test results could not satisfy the requirements, the method can go back to the previous step of the fourth proportion analysis using the fourth proportion analysis index IV, with the subsequent proportion values in the corresponding optimized proportion sequence. If all the proportion values in the optimized proportion sequence corresponding to the fourth type analysis index IV fail to satisfy the performance verification, the method can go back to the previous step of the third proportion analysis using the third proportion analysis index III, with the subsequent proportion values in the corresponding optimized proportion sequence. If all the proportion values in the optimized proportion sequence corresponding to the third type analysis index III fail to satisfy the performance verification, the method can go back to the previous step of the second proportion analysis using the second proportion analysis index II, with the subsequent proportion values in the corresponding optimized proportion sequence. If all the proportion values in the optimized proportion sequence corresponding to the second type analysis index II fail to satisfy the performance verification, the components in the initial formulation are reselected, and the formulation design and optimization are performed again step by step.

It can be understood by those skilled in the art that the requirements on electrical performance in step 6 can be a targeted objective, and can be set according to actual needs or industry standards.

In some embodiments of the present invention, the electrical performance, mechanical performance, and strippable performance are evaluated in the final verification for the formulation, which is an improvement over prior art.

Compared with prior art, the present invention has the following advantageous. As described-above, the present invention optimizes the formulation of the semi-conductive shielding material by satisfying the key performances of the matrix resin and the conductive carbon black, providing a definite guiding method. Therefore, blindness in the selection of the matrix resin and the conductive carbon black can be avoided, reducing waste of the subsequent experimental workload, and greatly improving the success rate of the formulation design.

According to the present invention, the matrix resin, the conductive carbon black, the dispersant, and the cross-linking agent are respectively optimized by four levels of analysis indexes. The optimization of formulation is toward key performances of high conductivity, high mechanical performances, ultra-smooth, scorch prevention, etc., corresponding to the priority of the analysis indexes, and is focused on the key performances generally concerned in the field of research and development of semi-conductive shielding material for high-voltage cable, which can prompt implementation of research and development of the semi-conductive shielding material, and also prompt the upgrade of the semi-conductive shielding material with different voltage levels.

In order to illustrate the steps of the present invention and the advantageous technical effects more clearly, a specific example is given below.

Step 1: the initial formulation is acquired, including one matrix resin, which is EBA, two conductive carbon blacks, which are MD511 and VXc500, two antioxidants, which are antioxidant 1010 and antioxidant 168, one dispersant, which is EBS, one coupling agent, which is KH550, and one cross-linking agent, which is bis(tert-butyl dioxy isopropyl) benzene (BIBP). The initial formulation may be determined on the basis of experimental experiences, national standards, etc.

Step 2: the matrix resin included in the initial formulation is subjected to the first type analysis I, i.e., the matrix resin type analysis.

The specific test results of the first type analysis index I of EBA in this example are as follows.

| Melting index | Mechanical performance | Thermal performance |
|---|---|---|
| 8.7 g/10min | Tensile strength of 12.1 MPa elongation at break is 781.6 % | Melting point is 96 ° C |

By comparing the above test results with the requirements in Table 1, it can be decided that the selected matrix resin EBA can fully satisfy the first type analysis index I, and thus step 3 is then performed.

Step 3: the conductive carbon blacks in the initial formulation are subjected to the second type analysis II, i.e., the carbon black type analysis.

The specific test results of type analysis index II of the conductive carbon blacks in this example are as follows.

| Type | DBP | Particle size | Ash content | Volume resistivity |
|---|---|---|---|---|
| MD511 | 129 cc/100 g | 32 nm | 1.1% | 3.1Ω·cm |
| VXc500 | 148cc/100 g | 37nm | 0.2% | 2.8Ω·cm |

By comparing the above test results with the requirements in Table 2, it can be decided that VXc500 can satisfy the requirements on the second type analysis index II, but MD511 does not satisfy the requirements. Thus, VXc500 is considered as the qualified conductive carbon black, and MD511 is removed from the formulation.

The preparation method of each sample of semi-conductive shielding material is as follows: The conductive carbon black is uniformly mixed with the coupling agent and the dispersant for modifying the conductive carbon black in advance. The modified conductive carbon black is mixed with other auxiliary agents, if any (e.g., the two antioxidants in this example), in a high-speed mixer with a controlled rotation speed in a range from 150 rpm to 250 rpm, and then added with the matrix resin and continued mixing at 45 °C to 50 °C. Then the obtained mixture is melted and extruded through a twin-screw extruder at an extrusion temperature of 180 °C and a rotation speed of 120 rpm, and is pelletized and dried to obtain pellets. The obtained pellets are placed into a container, which is heated in an oven to 65 °C. Then, the pellets are uniformly mixed with the cross-linking agent which is well-grinded previously and then heated in the oven at 65 °C for 10 hours, allowing the pellets to sufficiently absorb the cross-linking agent, thereby obtaining the semi-conductive shielding material for high-voltage cable.

Four samples of semi-conductive shielding material are prepared by the above-described method, respectively having different proportions of VXc500 as the conductive carbon black.

The conductive carbon black is subjected to the second proportion analysis II for carbon black proportion optimization. In the second proportion analysis II, the resistivity and elongation at break of the formed samples of semi-conductive shielding material are tested. The specific test results of the second proportion analysis II for different proportions of VXc500 in this example are as follows.

| Proportion of carbon black by weight | Resistivity at 23 °C | Elongation at break |
|---|---|---|
| 22% | 90 Q cm | 336.1% |
| 26% | 15 Ω·cm | 205.7% |
| 30% | 9.7Ω·cm | 170.5% |
| 34% | 5.4 Q cm | 110.6% |

By comparing the above test results with the requirements in Table 3, it can be decided that VXc500 at the proportion of both 26% and 30% can satisfy requirements of resistivity and elongation at break, and are considered to be qualified, and thus step 4) is then performed with 26% VXc500 and 30% VXc500 respectively.

Step 4: the dispersant in the initial formulation is subjected to third type analysis III, i.e., the dispersant type analysis.

The specific test results of third type analysis index III of EBS and KH550 (1:1, w/w) in this example are as follows.

| Resistivity | Elongation at break | Number of surface protrusions |
|---|---|---|
| 15.0 Q cm | 170.5% | 3 |

By comparing the above test results with the requirements in Table 4, it can be decided that EBS and KH550 (1:1, w/w) can satisfy third type analysis index III, and thus the proportion analysis of the combination of EBS and KH550 (1:1, w/w) by using third proportion analysis index III is performed.

Three samples of semi-conductive shielding material are prepared by the above-described method, respectively having different proportions of the combination of EBS and KH550 (1:1, w/w), which are respectively 1%, 2%, and 3%.

The proportion of the combination of EBS and KH550 (1:1, w/w) is subjected to the third proportion analysis III for dispersion optimization. In the proportion analysis III, the number of surface protrusions of the formed samples of semi-conductive shielding material is tested. The specific test results of third proportion analysis III for different proportions of the combination of EBS and KH550 (1:1, w/w) in this example are as follows.

| | | | |
|---|---|---|---|
| Proportion of the combination of EBS and KH550 (1:1, w/w) by weight | 1% | 2% | 3% |
| Number of surface protrusions | 3 | 0 | 2 |

Therefore, according to the number of surface protrusion test results, the proportions of the combination of EBS and KH550 (1:1, w/w) are ranked as 2%, 3%, 1%, and thus step 5) is performed in this order.

Step 5: the cross-linking agent in the initial formulation is subjected to the fourth type analysis IV

The fourth type analysis index IV includes resistivity, elongation at break, and number of surface protrusions. It is required that resistivity is ≤ 35Ω·cm, elongation at break is ≥150 %, and number of surface protrusions with a size of greater than 50 microns is ≤ 5.

The specific test results of type analysis index IV of BIBP as the cross-linking agent in this example are as follows.

| Resistivity | Elongation at break | Number of surface protrusions |
|---|---|---|
| 13.6 Ω·cm | 241.5% | 4 |

By comparing the above test results with the requirements in Table 4, it can be decided that BIBP is considered to be qualified as the cross-linking agent, and thus the proportion analysis of BIBP by using proportion analysis index IV is performed.

Three samples of semi-conductive shielding material are prepared by the above-described method, respectively having different proportions of the BIBP, which are 0.5%, 1%, and 1.5%, respectively.

| Proportion of BIBP by weight | Gel content | Permanent deformation rate | Thermal elongation |
|---|---|---|---|
| 0.5% | 38.9% | 47% | 145% |
| 1% | 72.2% | 6% | 27% |
| 1.5% | 82.4% | 1% | 7% |

By comparing the above test results with the requirements in Table 5, it can be decided that BIBP at 0.5% could not satisfy the requirements, and BIBP at 1.5% is prior to BIBP at 1%. Thus, step 6 is then performed with 1% BIBP and 1.5% BIBP as the cross-linking agent respectively and sequentially.

Step 6: the performances are verified.

According to the optimizations in the above steps, the optimized formulation is obtained as follows. The matrix resin is EBA, the conductive carbon black is VXc500 in the amount of 30 wt.%, the dispersant is EBS in the amount of 1wt.%, the coupling agent is KH550 in the amount of 1wt.%, and the cross-linking agent is BIBP in the amount of 1 wt.%.

The verification of electrical performance is type analysis, specifically including: verification of electrical performance, mechanical performance, strippable performance and surface finish, and the obtained verification results are shown in the following table.

| Resistivity | Mechanical performance | Number of surface protrusions | Strippable performance |
|---|---|---|---|
| 9.6 Ω·cm at 23 °C; | Elongation at break is 298.2%; | 0 | non-strippable |
| 73.6Ω·cm at 90 °C | Tensile strength is 15.3 MPa | | |

All the above parameters of the formulation can satisfy the verification requirements, and the method is finished.

The technical features in the examples above may be implemented in any combination. For the purpose of simplicity, not all combinations are described herein. However, such combination should all be considered as within the scope of the present invention given that there is no contradiction.

The detailed examples described herein are only for the purpose of illustrating the present disclosure and are not intended to limit the scope of the present disclosure in any way. A person skilled in the art will understand that various variations and modifications can be made to the examples described herein without departing from the scope and spirit of the present disclosure. Such variations and modifications should all be considered as contemplated by the present disclosure, the scope of which should only be defined by the following claims.

## Claims

1. A method for designing and optimizing formulation of semi-conductive shielding material for high-voltage AC cable, comprising following steps of:
step 1, acquiring formulation of semi-conductive shielding material for high-voltage AC cable, wherein the formulation comprises a matrix resin, conductive carbon black, a dispersant, a coupling agent, and a cross-linking agent;
step 2, preparing a sample of substantially pure matrix resin by hot-pressing the matrix resin in the formulation of step 1; testing a first type analysis index I of the hot-pressed sample; performing a first type analysis on the matrix resin according to a test result of the first type analysis index I, to achieve an optimized type of matrix resin;
step 3, testing a second type analysis index II of the conductive carbon black in the formulation of step 1; and performing a second type analysis on the conductive carbon black according to a test result of the second type analysis index II, to achieve an optimized type of conductive carbon black;
step 4, preparing a first sample of semi-conductive shielding material from the formulation, wherein the matrix resin and the conductive carbon black are in the optimized types; testing a third type analysis index III of the first sample; and performing a third type analysis on the dispersant and the coupling agent according to a test result of the third type analysis index III, to achieve optimized types of dispersant and coupling agent;
step 5, preparing a second sample of semi-conductive shielding material from the formulation, wherein the matrix resin, the conductive carbon black, the dispersant, and the coupling agent are in the optimized types; testing a fourth type analysis index IV of the second sample; and performing a fourth type analysis on the cross-linking agent according to a test result of the fourth type analysis index IV, to achieve an optimized type of cross-linking agent, thereby obtaining an optimized formulation; and
step 6, verifying performances of the optimized formulation; determining whether the performances of the optimized formulation satisfies preset requirements; if yes, terminating the method; and if no, repeating the method from step 1.

2. The method according to claim 1, further comprising:
step 3', preparing multiple third samples of semi-conductive shielding material from the formulation, wherein only proportions of the conductive carbon black are varied among the third samples; testing a second proportion analysis index II of each third sample; and performing a second proportion analysis on the conductive carbon black according to a test result of the second proportion analysis index II, to achieve an optimized proportion of conductive carbon black;
step 4', preparing multiple fourth samples of semi-conductive shielding material from the formulation, wherein only proportions of the dispersant and the coupling agent are varied among the fourth samples; testing a third proportion analysis index III of each fourth sample; and performing a third proportion analysis on the dispersant and the coupling agent according to a test result of the third proportion analysis index III, to achieve an optimized proportion of dispersant and coupling agent; and
step 5', preparing multiple fifth samples of semi-conductive shielding material from the formulation, wherein only proportions of the cross-linking agent are varied among the fifth samples; testing a fourth proportion analysis index IV of each fifth sample; and performing a fourth proportion analysis on the cross-linking agent according to the test result of the fourth proportion analysis index IV, to achieve an optimized proportion of cross-linking agent, thereby obtaining an optimized formulation.

3. The method according to claim 2, wherein steps 3' to 5' are performed after step 5, in the preparing of the third samples, the fourth samples, or the fifth samples, all the matrix resin, the conductive carbon black, the dispersant, the coupling agent, and the cross-linking agent are in the optimized types.

4. The method according to claim 2, wherein step 3' is performed next to step 3, in the preparing of the third samples, the matrix resin and the conductive carbon black are in the optimized types;
step 4' is performed next to step 4, in the preparing of the fourth samples, the matrix resin, the dispersant, and the coupling agent are in the optimized types, the conductive carbon black is in the optimized type and the optimized proportion;
step 5' is performed next to step 5, in the preparing of the fifth samples, the matrix resin and the cross-linking agent are in the optimized types, the conductive carbon black, the dispersant, and the coupling agent are in the optimized types and the optimized proportions.

5. The method according to any one of claims 2 to 4, wherein the first type analysis index I comprises melt flow index, tensile strength, elongation at break, and melting point, and in step 2, the first type analysis on the matrix resin comprises:
determining whether test results of melting index, tensile strength, elongation at break, and melting point are respectively larger than a melting index set value, a tensile strength set value, a matrix resin elongation set value, and a melting point set value;
if yes, determining that the matrix resin is in the optimized type of matrix resin; and
if no, substituting the matrix resin with another matrix resin, and repeating the first type analysis.

6. The method according to any one of claims 2 to 5, wherein the second type analysis index II comprises DBP absorption number, particle size, ash content, and volume electrical resistivity, and in step 3, the second type analysis on the conductive carbon black comprises:
determining whether a test result of DBP absorption number is larger than a DBP absorption number set value, a the test result of particle size is in a particle size set range, and test results of ash content and volume electrical resistivity are respectively smaller than an ash content set value and a volume electrical resistivity set value;
if yes, determining that the conductive carbon black is in the optimized type of conductive carbon black; and
if no, substituting the conductive carbon black with another conductive carbon black, and repeating the second type analysis.

7. The method according to any one of claims 2 to 6, wherein the second proportion analysis index II comprises electrical resistivity and elongation at break, and in step 3', the second proportion analysis on the conductive carbon black comprises:
selecting proportions of conductive carbon black corresponding to the third samples whose test results satisfy that test results of electrical resistivity are smaller than an electrical resistivity set value and test results of elongation at break are larger than the elongation set value;
sorting the selected proportions of conductive carbon black according to the test results of electrical resistivity from small to large, and when the test results of electrical resistivity are the same, according to the test results of elongation at break from large to small, thereby obtaining an optimized proportion sequence of conductive carbon black; and
determining that a first proportion value in the optimized proportion sequence of conductive carbon black is the optimized proportion of conductive carbon black.

8. The method according to any one of claims 2 to 7, wherein in steps 4 and 4', a weight ratio between the dispersant and the coupling agent is a fixed value, and only proportions of a combination of the dispersant and the coupling agent are varied among the fourth samples, preferably the fixed value is 1:1.

9. The method according to any one of claims 2 to 8, wherein the third type analysis index III comprises electrical resistivity, elongation at break, and surface protrusion number, and in step 4, the third type analysis on the dispersant and the coupling agent comprises:
determining whether test results of electrical resistivity and surface protrusion number are respectively smaller than an electrical resistivity set value and a surface protrusion number set value, and a test result of elongation at break is larger than an elongation set value;
if yes, determining that the dispersant and the coupling agent are in the optimized types of dispersant and coupling agent; and
if no, substituting the dispersant and the coupling agent respectively with another dispersant and another coupling agent, and repeating the third type analysis.

10. The method according to any one of claims 2 to 9, wherein the third proportion analysis index III comprises surface protrusion number, and in step 4', the third proportion analysis on the dispersant and the coupling agent comprises:
selecting proportions of dispersant and coupling agent corresponding to the fourth samples whose test results of surface protrusion number are smaller than a surface protrusion number set value;
sorting the selected proportions of dispersant and coupling agent according to the test results of surface protrusion number from small to large, thereby obtaining an optimized proportion sequence of dispersant and coupling agent; and
determining that a first proportion value in the optimized proportion sequence of dispersant and coupling agent is the optimized proportion of dispersant and coupling agent.

11. The method according to any one of claims 2 to 10, wherein the fourth type analysis index IV comprises electrical resistivity, elongation at break, and surface protrusion number, and in step 5, the fourth type analysis on the cross-linking agent comprises:
determining whether test results of electrical resistivity and surface protrusion number are respectively smaller than the electrical resistivity set value and the surface protrusion number set value, and a test result of elongation at break is larger than the elongation set value;
if yes, determining that the cross-linking agent is in the optimized type of cross-linking agent; and
if no, substituting the cross-linking agent with another cross-linking agent, and repeating the fourth type analysis.

12. The method according to any one of claims 2 to 11, wherein the fourth proportion analysis index IV comprises gel content, thermal elongation, and permanent deformation, and in step 5', the fourth proportion analysis on the cross-linking agent comprises:
selecting proportions of cross-linking agent corresponding to the fifth samples whose test results satisfy that test results of gel content are larger than a gel content set value, and test results of thermal elongation and test results of permanent deformation are respectively larger than a thermal elongation set value and a permanent deformation set value;
sorting the selected proportions of cross-linking agent according to the test results of gel content from large to small, and when the test results of gel content are the same, according to the test results of thermal elongation from small to large, and when the test results of thermal elongation are the same, according to the test results of permanent deformation from small to large, thereby obtaining an optimized proportion sequence of cross-linking agent; and
determining that a first proportion value in the optimized proportion sequence of cross-linking agent is the optimized proportion of cross-linking agent.

13. The method according to any one of claims 1 to 12, wherein the verifying performances of the optimized formulation in step 6 comprises:
preparing an optimized sample of semi-conductive shielding material from the optimized formulation;
testing electrical resistivity, tensile strength, elongation at break, strippability, and surface protrusion number;
determining whether test results of electrical resistivity and surface protrusion number are respectively smaller than an electrical resistivity set value and a surface protrusion number set value, test results of tensile strength and elongation at break are respectively larger than a tensile strength set value and an elongation set value, and the optimized sample is not strippable;
if yes, determining that the performances of the optimized formulation satisfies preset requirements; and
if no, determining that the performances of the optimized formulation do not satisfies preset requirements.
